# EUROPEAN PATENT APPLICATION

(11) **EP 4 192 017 A1**
(43) Date of publication of application: **07.06.2023**
(21) Application number: 21860160.7
(22) Date of filing: 12.08.2021
(51) Int. Cl.: H04N 21/2385, H04W 72/08, H04W 72/10

(54) **HIGH-DEFINITION VIDEO SCHEDULING METHOD, BASE STATION, SCHEDULING SYSTEM, AND STORAGE MEDIUM**

(30) Priority: 31.08.2020 CN 202010899552
(71) Applicant: ZTE Corporation, Shenzhen, Guangdong 518057 (CN)
(72) Inventor: ZHANG, Yong, Shenzhen, Guangdong 518057 (CN)
(74) Representative: Savi, Massimiliano
(86) International application number: PCT/CN2021/112317
(87) International publication number: WO 2022/042321

(57) **Abstract**

A high-definition video scheduling method, a base station, a scheduling system, and a storage medium, relating to the technical field of 5G wireless communications. The method comprises: determining whether multiple detected messages correspond to a high-definition video, and estimating the bandwidth traffic required for the high-definition video (S110); and determining the quality of service of the high-definition video on the basis of the high-definition video and the bandwidth traffic, and scheduling the high-definition video according to the quality of service (S120).

## Description

### CROSS-REFERENCE TO RELATED APPLICATION

This application is filed based on Chinese Patent Application No. 202010899552.6, filed on August 31, 2020, and claims priority to the Chinese patent application, the entire contents of which are incorporated herein by reference.

### TECHNICAL FIELD

Embodiments of the present disclosure relate to the technical field of 5G wireless communications, and more particularly, to a scheduling method for a high-definition video, a base station, a scheduling system and a storage medium.

### BACKGROUND

With the opportunity for commercialization of 5G wireless communication technologies, services such as high-definition videos are key services of 5G, and requirements for air interface bandwidth such as streaming media videos on demand are gradually increasing. Due to different film sources, the required bandwidth for streaming media videos ranges from several Mbps to several hundred Mbps. In the process of streaming media videos on demand, File Transfer Protocol (FTP) and User Datagram Protocol (UDP) are also carried out simultaneously, which usually leads to a lagging screen or time-consuming downloading of streaming videos.

### SUMMARY

Provided are a method for scheduling a high-definition video, a base station, a scheduling system and a storage medium in some embodiments of the present disclosure, to at least alleviate one of the related technical problems, including the lagging pictures of the streaming media video, the non-fluentness of the pictures or the time-consuming download of the videos resulting from the simultaneous performing of the FTP, UDP and the like.

In view of the above, in accordance with an aspect of the present disclosure, an embodiment provides a method for scheduling a high-definition video. The method includes, performing a determination as to whether data of a high-definition video is contained in a plurality of detected packets, and estimating a bandwidth traffic required for the high-definition video, in response to a determination that the data of the high-definition video is contained in the plurality of detected packets; and determining quality of service of the high-definition video based on the high-definition video and the bandwidth traffic, and scheduling the high-definition video according to the quality of service.

In accordance with another aspect of the present disclosure, an embodiment further provides a base station. The base station includes a memory and a processor. The memory is configured to store a computer program which, when executed by the processor, causes the processor to carry out the method for scheduling a high-definition video as described above.

In accordance with yet another aspect of the present disclosure, an embodiment further provides a scheduling system. The system includes a base station and a terminal device. The base station is configured to carry out the method for scheduling a high-definition video as described above, to schedule the high-definition video, and to send the scheduled high-definition video to the terminal device.

In accordance with yet another aspect of the present disclosure, an embodiment further provides a computer-readable storage medium for computer-readable storage, where the storage medium stores at least one program which, when executed by at least one processor, causes the processor to carry out the method for scheduling a high-definition video as described above.

### BRIEF DESCRIPTION OF DRAWINGS

FIG. 1 depicts a schematic flowchart showing a method for scheduling a high-definition video according to an embodiment of the present disclosure;
FIG. 2 depicts a schematic diagram showing a first scenario of a base station and a terminal device according to an embodiment of the present disclosure;
FIG. 3 depicts a schematic diagram showing a second scenario of a base station and a terminal device according to an embodiment of the present disclosure;
FIG. 4 depicts a schematic flowchart showing a method for scheduling a high-definition video according to another embodiment of the present disclosure;
FIG. 5 depicts a schematic block diagram showing a scheduling system according to an embodiment of the present disclosure; and
FIG. 6 depicts a schematic block diagram showing a base station according to an embodiment of the present disclosure.

### DETAILED DESCRIPTION

A description of the technical schemes in some embodiments of the present disclosure will be provided below with reference to the accompanying drawings in the embodiments of the present disclosure. Apparently, the embodiments as described herein are merely a part, but not all of the embodiments of the present disclosure. All other embodiments derived by those having ordinary skills in the art based on the embodiments of the present disclosure without devoting creative efforts shall fall within the scope of the embodiments of the present disclosure.

The flowcharts as shown in the accompanying drawings are merely illustrative, and do not necessarily include all the contents and operations/steps, or have to be performed in the order set forth. For example, some operations/steps may also be decomposed, combined or partly combined. Therefore, the actual execution sequences may be changed according to the actual conditions.

Provided are a scheduling method for a high-definition video, a base station, a scheduling system, and a storage medium in various embodiments of the present disclosure.

Some embodiments of the present disclosure are described in detail below with reference to the accompanying drawings. The following embodiments and the features in the embodiments may be combined with each other without conflict.

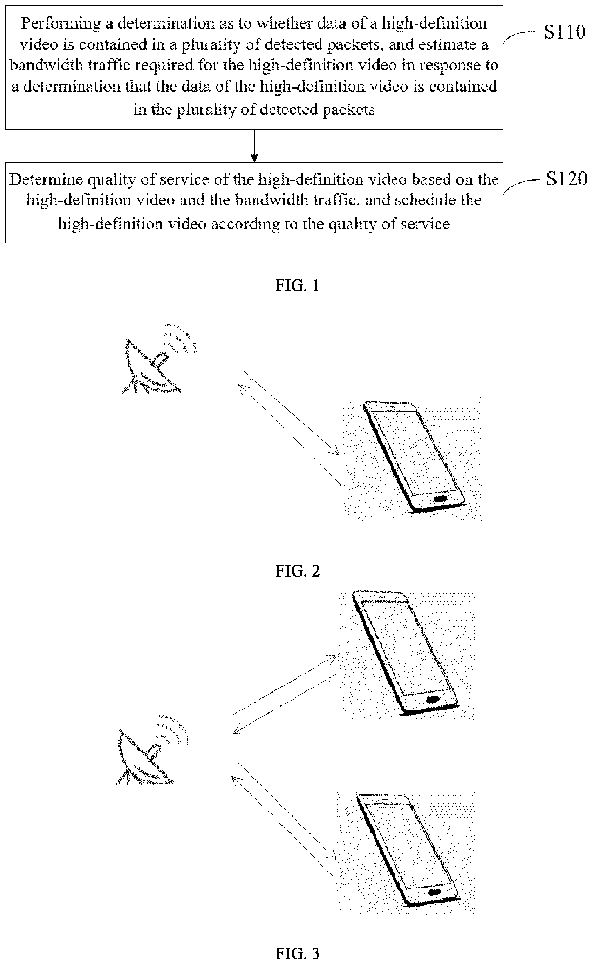

Referring to FIG. 1, which depicts a schematic flowchart showing a method for scheduling a high-definition video according to an embodiment of the present disclosure.

As shown in FIG. 1, this embodiment provides a method for scheduling a high-definition video, which includes the following S110 and S120.

At S110, a determination is performed as to whether data of a high-definition video is contained in a plurality of detected packets, and a bandwidth traffic required for the high-definition video is estimated in response to a determination that data of a high-definition video is contained in a plurality of packets.

In an implementation, a plurality of packets are detected, and a determination is performed as to whether the data of a high-definition video is contained in the plurality of detected packets. For example, as shown in FIG. 2, the base station detects a plurality of packets from one terminal device. Alternatively, as shown in FIG. 3, the base station detects packets from a plurality of terminal devices. When the plurality of packets from one terminal device or packets from the plurality of terminal devices are detected, a type of each packet is acquired. According to the type of each packet, a determination is performed as to whether this packet contains data of a high-definition video. In an implementation, when it is detected that a downlink packet in a terminal device is received, a type of the downlink packet is identified through a Packet Data Convergence Protocol (PDCP) layer. In an implementation, the base station includes a centralized unit (CU) side, which is a centralized unit, and includes the PDCP layer. When it is detected that the downlink packet in the terminal device is received, the downlink packet is decoded by means of the PDCP layer to identify the type of the downlink packet. When it is detected that the type of the downlink packet is a Real-time Transport Protocol (RTP) packet, it is determined that the downlink packet contains data of a high-definition video.

When it is determined that data of a high-definition video is contained in the plurality of packets, the bandwidth traffic required for the high-definition video is estimated. In an implementation, a packet length and a number of packets of the high-definition video are acquired, and an estimated bandwidth traffic of the high-definition video is acquired through the packet length and the number of the packets. In an implementation, when a packet containing data of a high-definition video is acquired, the packet length and the number of the packets of the high-definition video are counted from the packet. The bandwidth traffic of the high-definition video is estimated by calculating the packet length and the number of the packets.

In an embodiment, determining whether data of a high-definition video is contained in a plurality of detected packets includes: determining a type of each packet in the plurality of detected packets; for each packet, if it is determined that the packet is the type of RTP packet, acquiring a download rate of the RTP packet; and if the download rate is greater than a preset download rate, determining a video corresponding to the RTP packet to be a high-definition video.

In an implementation, a plurality of packets are detected, and a determination as to whether data of a high-definition video is contained in the plurality of detected packets, is performed. For example, as shown in FIG. 2, the base station detects a plurality of packets from one terminal device. Alternatively, as shown in FIG. 3, the base station detects packets from a plurality of terminal devices. When the plurality of packets from one terminal device is detected, or packets from the plurality of terminal devices are detected, a type of each packet is acquired. According to the type of each packet, it is determined whether this packet corresponds to a high-definition video. In an implementation, when it is detected that a downlink packet in a terminal device is received, a type of the downlink packet is identified through a Packet Data Convergence Protocol (PDCP) layer. In an example, the base station includes a CU side, which is a centralized unit, and includes the PDCP layer. When it is detected that the downlink packet in the terminal device is received, the downlink packet is decoded by means of the PDCP layer to identified the type of the downlink packet. When it is identified that the downlink packet is the type of a Real-time Transport Protocol (RTP) packet, a download rate of the RTP packet is acquired. For example, the PDCP layer counts a bit stream and an incoming packet rate of the downlink packet, and acquires the download rate of the RTP packet by calculating the bit stream and the incoming packet rate.

The download rate is compared with a preset download rate, and the video corresponding to the RTP packet is determined to be a high-definition video if the download rate is greater than the preset download rate. For example, when the acquired download rate of the RTP packet is 30 Mbps and the acquired preset download rate is 10 Mbps, the video corresponding to the RTP packet is determined to be a high-definition video.

In an implementation, estimating a bandwidth traffic required for the high-definition video includes: estimating the bandwidth traffic required for the high-definition video based on the download rate of the high-definition video.

In an implementation, when the download rate of the high-definition video is acquired, the bandwidth traffic required for the high-definition video is estimated through the download rate of the high-definition video. For example, when the acquired download rate of the high-definition video is 20 Mbps, the bandwidth traffic required for the high-definition video is estimated to be 20 Mbps; similarly, when the acquired download rate of the high-definition video is 30 Mbps, the bandwidth traffic required for the high-definition video is estimated to be 30 Mbps.

At S120, quality of service of the high-definition video is determined based on the high-definition video and the bandwidth traffic, and the high-definition video is scheduled according to the quality of service.

In an implementation, when the video is determined to be a high-definition video, a bearer level and an air interface bandwidth traffic of the high-definition video are acquired. For example, the base station includes a DU side, which is a distributed unit. When the CU side determines that data of a high-definition video is contained in the plurality of packets, the data of a high-definition video contained in the plurality of packets is sent to the DU side, thereby acquiring an estimated air interface bandwidth traffic of the high-definition video uploaded by the DU side. When the air interface bandwidth traffic is acquired, the quality of service of the high-definition video is determined according to the air interface bandwidth traffic and the bandwidth traffic, where the quality of service includes a priority level and/or scheduling information of the high-definition video. For example, when the air interface bandwidth traffic and the bandwidth traffic are acquired, the air interface bandwidth traffic is compared with the bandwidth traffic. If the air interface bandwidth traffic is greater than or equal to the bandwidth traffic, bearer levels of the plurality of packets are acquired to acquire a priority level, where the bearer level of the high-definition video is higher than bearer levels of other packets according to the priority level, and the priority level is taken as the quality of service of the high-definition video. Alternatively, if the air interface bandwidth traffic is less than the bandwidth traffic, a differential bandwidth traffic between the air interface bandwidth traffic and the bandwidth traffic is acquired and served as the quality of service of the high-definition video.

The DU side includes a Media Access Control (MAC) layer, which is a data link layer in Open System Interconnection seven-layer protocol. The MAC layer acquires the quality of service and schedules the high-definition video according to the acquired quality of service. For example, a control plane acquires the quality of service of the high-definition video determined by the CU side, and the MAC layer acquires the quality of service from the control plane to schedule service data of the high-definition video. When the acquired quality of service is the priority level, the DU side will schedule the bearer level of the high-definition video according to the priority level. For example, when the bearer level of the high-definition video is a third level, the bearer level of the high-definition video is modified to a first level. Alternatively, when the quality of service is the scheduling information, the DU side will schedule the air interface bandwidth traffic of the high-definition video according to the scheduling information. For example, the scheduling information is 10 Mbps, the air interface bandwidth traffic of the high-definition video is 10 Mbps, and the air interface bandwidth traffic of the high-definition video is modified to 20 Mbps by means of the 10 Mbps of scheduling information.

In an embodiment, the quality of service includes a priority level and scheduling information, and determining the quality of service of the high-definition video based on the high-definition video and the bandwidth traffic includes: ranking the plurality of packets to acquire the priority level, where the packet(s) corresponding to the high-definition video is(are) assigned with a higher level than other packets in the plurality of packets according to the priority level; and acquiring an air interface bandwidth traffic of the high-definition video, and determining scheduling information of the high-definition video according to the air interface bandwidth traffic and the bandwidth traffic.

In an implementation, the bearer levels of the plurality of packets are acquired, and the bearer levels of the plurality of packets are ranked to acquire an optimal level, where the packet(s) corresponding to the high-definition video is(are) assigned with a higher bearer level than other packets in the plurality of packets according to the priority level. For example, a bearer level of a first packet, a bearer level of a second packet and a bearer level of the high-definition video corresponding to a third packet are acquired to acquire a bearer level of a first level, where the bearer level of the first level is higher than the bearer levels of other packets.

The base station includes a DU side, through which the air interface bandwidth traffic of the high-definition video is estimated. For example, when a plurality of packets from one terminal device are detected, and when the air interface bandwidth traffic of this terminal device is 100 Mbps, and the number of the packets is four, the air interface bandwidth traffic of each packet is estimated to be 25 Mbps. That is, the air interface bandwidth traffic of the high-definition video corresponding to this packet is 25 Mbps. Alternatively, when packets from a plurality of terminal devices are detected and each terminal device has only one packet, the air interface bandwidth traffic of the terminal device is 100 Mbps. That is, the air interface bandwidth traffic of the high-definition video corresponding to this packet is 100 Mbps. The scheduling information of the high-definition video is determined according to the air interface bandwidth traffic and the bandwidth traffic. For example, when the bandwidth traffic is 20 Mbps and the air interface bandwidth traffic is 25 Mbps, the scheduling information of the high-definition video is determined to be 25 Mbps. Alternatively, when the bandwidth traffic is 20 Mbps and the air interface bandwidth traffic is 100 Mbps, the scheduling information of the high-definition video is determined to be 100 Mbps.

In an embodiment, determining scheduling information of the high-definition video according to the air interface bandwidth traffic and the bandwidth traffic includes: if the air interface bandwidth traffic is less than the bandwidth traffic, acquiring a differential bandwidth traffic between the air interface bandwidth traffic and the bandwidth traffic; and determining the scheduling information of the high-definition video based on the differential bandwidth traffic.

In an implementation, the acquired air interface bandwidth traffic is compared with the bandwidth traffic, and if the air interface bandwidth traffic is less than the bandwidth traffic, a differential bandwidth traffic between the air interface bandwidth traffic and the bandwidth traffic is acquired. For example, when the bandwidth traffic is 50 Mbps and the air interface bandwidth traffic is 20 Mbps, then the acquired differential bandwidth traffic between the air interface bandwidth traffic and the bandwidth traffic is 30 Mbps, and the differential bandwidth traffic of 30 Mbps is determined to be the scheduling information of the high-definition video.

In an embodiment, scheduling the high-definition video according to the quality of service includes: scheduling a bearer level of the high-definition video based on the priority level; and scheduling the air interface bandwidth traffic of the high-definition video based on the scheduling information, such that the scheduled air interface bandwidth traffic is consistent with the bandwidth traffic.

In an implementation, the control plane acquires the quality of service of the high-definition video in the CU side and transmits the quality of service to the DU side. The DU side schedules, according to the priority level of the quality of service, the bearer level of the high-definition video to the first level. When the scheduling information of the quality of service is acquired, the air interface bandwidth traffic of the high-definition video is scheduled based on the scheduling information, such that the scheduled air interface bandwidth traffic is consistent with the bandwidth traffic. For example, the scheduling information is that the differential bandwidth traffic is 30 Mbps, the air interface bandwidth traffic of the high-definition video is 20 Mbps, and the air interface bandwidth traffic of the second packet is 50 Mbps. The air interface bandwidth traffic of the high-definition video is scheduled from 20 Mbps to 50 Mbps by means of the scheduling information of 30 Mbps of differential bandwidth traffic. The air interface bandwidth traffic of the second packet is 20 Mbps, where a video corresponding to the second packet is not a high-definition video.

In various embodiments of the present disclosure, types of a plurality of packets are determined, it is determined that data of a high-definition video is contained in the plurality of packets according to the types, and a bandwidth traffic of the high-definition video is estimated. Quality of service is determined according to the high-definition video and the bandwidth traffic, a bearer level of the high-definition video is scheduled according to a priority level of the quality of service, and an air interface bandwidth traffic of the high-definition video is scheduled according to scheduling information in the quality of service. Thereby, the time for download is reduced by scheduling the bearer level of the high-definition video, or picture smoothness of the high-definition video is improved by scheduling the air interface bandwidth traffic.

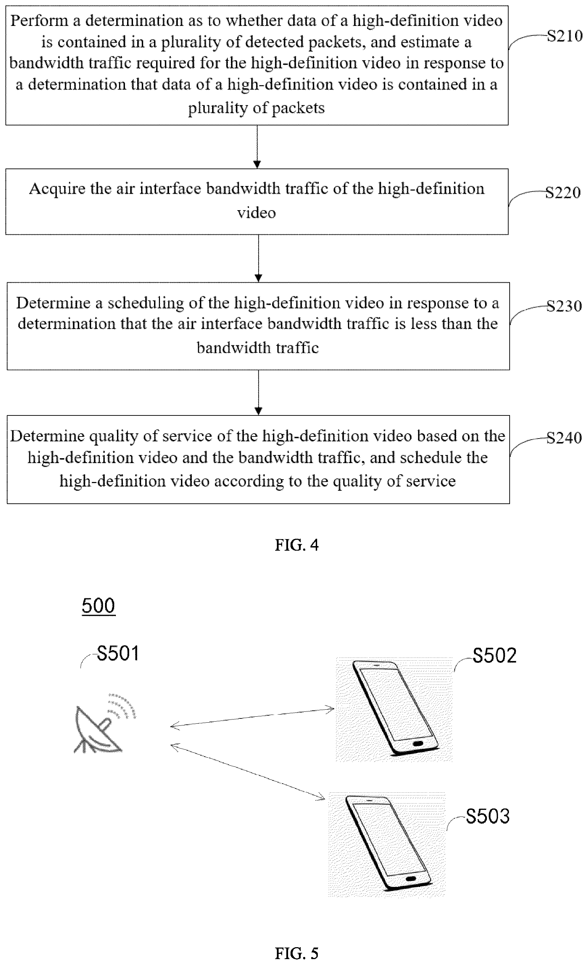

Referring to FIG. 4, which depicts a schematic flowchart showing a method for scheduling a high-definition video according to another embodiment of the present disclosure.

As shown in FIG. 4, this embodiment provides a method for scheduling a high-definition video, which includes the following S210 to S240.

At S210, a determination is performed as to whether data of a high-definition video is contained in a plurality of detected packets, and a bandwidth traffic required for the high-definition video is estimated in response to a determination that data of a high-definition video is contained in a plurality of packets.

In an implementation, a plurality of packets are detected, and a determination is performed as to whether the data of a high-definition video is contained in the plurality of detected packets. For example, as shown in FIG. 2, the base station detects a plurality of packets from one terminal device. Alternatively, as shown in FIG. 3, the base station detects packets from a plurality of terminal devices. When the plurality of packets from one terminal device or packets from the plurality of terminal devices are detected, a type of each packet is acquired. According to the type of each packet, a determination is performed as to whether this packet contains data of a high-definition video. In an implementation, when it is detected that a downlink packet in a terminal device is received, a type of the downlink packet is identified through a Packet Data Convergence Protocol (PDCP) layer. In an implementation, the base station includes a CU side, which is a centralized unit, and includes the PDCP layer. When it is detected that the downlink packet in the terminal device is received, the downlink packet is decoded by means of the PDCP layer to identify the type of the downlink packet. When it is detected that the type of the downlink packet is the type of Real-time Transport Protocol (RTP) packet, it is determined that the downlink packet corresponds to a high-definition video.

When it is determined that data of a high-definition video is contained in the plurality of packets, the bandwidth traffic required for the high-definition video is estimated. In an implementation, a packet length and a number of packets of the high-definition video are acquired, and an estimated bandwidth traffic of the high-definition video is acquired through the packet length and the number of the packets. In an implementation, when a packet corresponding to a high-definition video is acquired, the packet length and the number of the packets of the high-definition video are counted from the packet. The bandwidth traffic of the high-definition video is estimated by calculating the packet length and the number of the packets.

At S220, the air interface bandwidth traffic of the high-definition video is acquired.

The base station includes a DU side, which is a distributed unit. When the CU side determines that data of a high-definition video is contained in the plurality of packets, the data of a high-definition video is sent to the DU side, thereby acquiring an estimated air interface bandwidth traffic of the high-definition video uploaded by the DU side.

At S230, if it is determined that the air interface bandwidth traffic is less than the bandwidth traffic, it is determined that the high-definition video is to be scheduled.

When the air interface bandwidth traffic is acquired, the air interface bandwidth traffic is compared with the bandwidth traffic, and if it is determined that the air interface bandwidth traffic is less than the bandwidth traffic, it is determined that the high-definition video is to be scheduled. For example, when the bandwidth traffic is 50 Mbps and the air interface bandwidth traffic is 20 Mbps, it is determined that the air interface bandwidth traffic is less than the bandwidth traffic. Scheduling the high-definition video includes scheduling the bearer level of the high-definition video and scheduling the air interface bandwidth traffic of the high-definition video.

At S240, quality of service of the high-definition video is determined based on the high-definition video and the bandwidth traffic, and the high-definition video is scheduled according to the quality of service.

In an implementation, the plurality of packets are ranked to acquire a priority level, where a packet corresponding to the high-definition video is assigned with a higher level than other packets in the plurality of packets according to the priority level. An air interface bandwidth traffic of the high-definition video is acquired, and scheduling information of the high-definition video is determined according to the air interface bandwidth traffic and the bandwidth traffic.

The base station includes a DU side, through which the air interface bandwidth traffic of the high-definition video is estimated. For example, when a plurality of packets from one terminal device are detected, and when the air interface bandwidth traffic of this terminal device is 100 Mbps, and the number of the packets is four, the air interface bandwidth traffic of each packet is estimated to be 25 Mbps. That is, the air interface bandwidth traffic of the high-definition video corresponding to this packet is 25 Mbps. Alternatively, when packets from a plurality of terminal devices are detected and each terminal device has only one packet, the air interface bandwidth traffic of the terminal device is 100 Mbps. That is, the air interface bandwidth traffic of the high-definition video corresponding to this packet is 100 Mbps. The scheduling information of the high-definition video is determined according to the air interface bandwidth traffic and the bandwidth traffic. For example, when the bandwidth traffic is 20 Mbps and the air interface bandwidth traffic is 25 Mbps, the scheduling information of the high-definition video is determined to be 25 Mbps. Alternatively, when the bandwidth traffic is 20 Mbps and the air interface bandwidth traffic is 100 Mbps, the scheduling information of the high-definition video is determined to be 100 Mbps.

The acquired air interface bandwidth traffic is compared with the bandwidth traffic, and if the air interface bandwidth traffic is less than the bandwidth traffic, a differential bandwidth traffic between the air interface bandwidth traffic and the bandwidth traffic is acquired. For example, when the bandwidth traffic is 50 Mbps and the air interface bandwidth traffic is 20 Mbps, the acquired differential bandwidth traffic between the air interface bandwidth traffic and the bandwidth traffic is 30 Mbps, and the differential bandwidth traffic of 30 Mbps is determined to be the scheduling information of the high-definition video.

The control plane acquires the quality of service of the high-definition video in the CU side and transmits the quality of service to the DU side. The DU side schedules, according to the priority level of the quality of service, the bearer level of the high-definition video to the first level. When the scheduling information of the quality of service is acquired, the air interface bandwidth traffic of the high-definition video is scheduled based on the scheduling information, such that the scheduled air interface bandwidth traffic is consistent with the bandwidth traffic. For example, the scheduling information is that the differential bandwidth traffic is 30 Mbps, the air interface bandwidth traffic of the high-definition video is 20 Mbps, and the air interface bandwidth traffic of the second packet is 50 Mbps. The air interface bandwidth traffic of the high-definition video is scheduled from 20 Mbps to 50 Mbps by means of the scheduling information of 30 Mbps of differential bandwidth traffic. The air interface bandwidth traffic of the second packet is 20 Mbps, where a video corresponding to the second packet is not a high-definition video.

In various embodiments of the present disclosure, when it is determined that data of a high-definition video is contained in a plurality of detected packets, a bandwidth traffic of the high-definition video is estimated, and an air interface bandwidth traffic of the high-definition video is acquired. When it is determined that the high-definition video is to be scheduled according to the bandwidth traffic and the air interface bandwidth traffic, quality of service is determined based on the high-definition video and the bandwidth traffic, a bearer level of the high-definition video is scheduled according to a priority level in the quality of service, and the air interface bandwidth traffic of the high-definition video is scheduled according to scheduling information of the quality of service. Thereby, the time for download is reduced by scheduling the bearer level of the high-definition video, and the picture smoothness of the high-definition video is improved by scheduling the air interface bandwidth traffic.

As shown in FIG. 5, an embodiment provides a schematic diagram showing a scenario of a scheduling system. The scheduling system 500 includes a base station 501, first-class user equipment 502 and second-class user equipment 503, where the first-class user equipment 502 and the second-class user equipment 503 may be mobile phones, tablets, laptops, desktops, televisions, etc., and a plurality of of the first-class user equipment 502 and plurality of the second-class user equipment 503 may be present, the embodiment is not limited thereto.

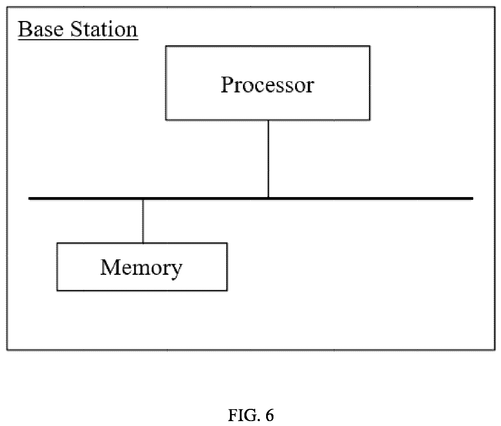

Referring to FIG. 6, which depicts a schematic block diagram showing a base station according to an embodiment of the present disclosure.

In some embodiments, the base station further includes a processor and a memory configured to store a computer program.

The processor is configured to execute the computer program which, when executed by the processor, causes the processor to carry out the method for scheduling high-definition video according to any one of the embodiments of the present disclosure.

It should be understood that the processor may be a Central Processing Unit (CPU). The processor may also be other general-purpose processors, Digital Signal Processors (DSP), Application Specific Integrated Circuit (ASIC), Field-Programmable Gate Array (FPGA) or other programmable logic devices, discrete gates or transistor logic devices, discrete hardware components, etc. The general-purpose processor may be a microprocessor, or the processor may be any conventional processor or the like.

An embodiment of the present disclosure further provides a computer-readable storage medium, storing a computer program which, when executed by the processor, causes the processor to carry out the method for scheduling a high-definition video according to any one of the embodiments of the present disclosure.

Disclosed are a method for scheduling a high-definition video, a base station, a scheduling system, and a storage medium in some embodiments of the present disclosure. According to the method, a determination as to whether data of a high-definition video is contained in a plurality of detected packets, and a bandwidth traffic required for the high-definition video is estimated. Quality of service of the high-definition video is determined based on the high-definition video and the bandwidth traffic, and the high-definition video is scheduled according to the quality of service. Thereby, the high-definition video is scheduled through the acquired quality of service in response to a determination that the data of the high-definition video is contained in the plurality of detected packets, and an air interface bandwidth traffic of the high-definition video is scheduled, thereby improving the picture smoothness of the high-definition video and reducing the time for download of the high-definition video.

Those having ordinary skills in the art can understand that functional modules/units in all or some steps, systems or apparatuses in the method disclosed above may be implemented by software, firmware, hardware or any suitable combination thereof. In a hardware implementation, the division between functional modules/units mentioned in the above description does not necessarily correspond to the division of physical components. For example, one physical component may have multiple functions, or one function or step may be jointly performed by a plurality of physical components. Some or all the physical components may be implemented as software executed by a processor such as a central processing unit, a digital signal processor or a microprocessor, or may be implemented as hardware or an integrated circuit such as an application-specific integrated circuit. Such software may be distributed on a computer-readable medium, which may include a computer-readable storage medium (or non-transitory medium) and a communication medium (or a transitory medium).

As well known to those having ordinary skills in the art, the term "computer-readable storage media" include volatile and nonvolatile, removable and non-removable media implemented in any method or technology for storage of information, such as computer-readable instructions, data structures, program modules, or other data. The computer-readable storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and can be accessed by a computer. Furthermore, as well known to those having ordinary skills in the art, communication media typically include computer-readable instructions, data structures, program modules or other data in a modulated data signal such as a carrier wave or other transport mechanism, and may include any information delivery media.

For example, the computer-readable storage media may be an internal storage unit of an electronic device of the foregoing embodiments, such as a hard disk or RAM of the electronic device. The computer-readable storage medium may also be an external storage device of the electronic device, such as a plug-in hard disk, a Smart Media Card (SMC), a Secure Digital (SD) card, a Flash Card and the like provided on the electronic device.

The electronic device and the computer-readable storage medium provided by the above embodiments acquire a corresponding intelligent contract by contracting an acquired artificial intelligence model, and deploying the intelligent contract in a blockchain. According to the embodiments of the present disclosure, by converting the artificial intelligence model into the intelligent contract, the intelligent contract can be smoothly deployed to a blockchain network, and the artificial intelligence model can be deployed to the intelligent contract of the blockchain, thus ensuring the automation of a data reasoning process, the traceability and verifiability of the whole process, and the security of data, models and transactions of two or more users.

The above-mentioned embodiments are merely some embodiments of the present disclosure, but the protection scope of the embodiments of the present disclosure is not limited thereto. Any equivalent modifications or replacements easily conceivable to those having ordinary skills in the art within the technical scope disclosed in the embodiments of the present disclosure shall fall within the protection scope of the embodiments of the present disclosure. Therefore, the protection scope of the embodiments of the present disclosure shall be subject to the protection scope of the claims.

## Claims

1. A method for scheduling a high-definition video, comprising,
performing a determination as to whether data of a high-definition video is contained in a plurality of detected packets, and estimating a bandwidth traffic for the high-definition video in response to a determination that the data of the high-definition video is contained in the plurality of detected packets; and
determining quality of service of the high-definition video based on the high-definition video and the bandwidth traffic, and scheduling the high-definition video according to the quality of service.

2. The method of claim 1, wherein performing a determination as to whether data of a high-definition video is contained in a plurality of detected packets comprises,
for each packet in the plurality of detected packets, determining a type of the packet;
in response to a determination that the respective packet is a Real-time Transport Protocol (RTP) packet, acquiring a download rate of the RTP packet; and
in response to the download rate being greater than a preset download rate, determining a video corresponding to the RTP packet to be a high-definition video.

3. The method of claim 2, wherein estimating a bandwidth traffic for the high-definition video comprises,
estimating the bandwidth traffic for the high-definition video based on the download rate of the high-definition video.

4. The method of claim 1, wherein the quality of service comprises a priority level and scheduling information, and determining quality of service of the high-definition video based on the high-definition video and the bandwidth traffic comprises,
ranking the plurality of packets to acquire a priority level, wherein a packet corresponding to the high-definition video has a higher level than other packets in the plurality of packets according to the priority level; and
acquiring an air interface bandwidth traffic of the high-definition video, and determining scheduling information of the high-definition video according to the air interface bandwidth traffic and the bandwidth traffic.

5. The method of claim 4, wherein determining scheduling information of the high-definition video according to the air interface bandwidth traffic and the bandwidth traffic comprises,
acquiring, in response to the air interface bandwidth traffic being less than the bandwidth traffic, a differential bandwidth traffic between the air interface bandwidth traffic and the bandwidth traffic; and
determining the scheduling information of the high-definition video based on the differential bandwidth traffic.

6. The method of claim 4, wherein scheduling the high-definition video according to the quality of service comprises,
scheduling a bearer level of the high-definition video based on the priority level; and
scheduling the air interface bandwidth traffic of the high-definition video based on the scheduling information, such that the scheduled air interface bandwidth traffic is consistent with the bandwidth traffic.

7. The method of claim 1, wherein prior to determining quality of service of the high-definition video based on the high-definition video and the bandwidth traffic, the method further comprises,
acquiring an air interface bandwidth traffic of the high-definition video; and
determining a scheduling of the high-definition video, in response to the air interface bandwidth traffic being less than the bandwidth traffic.

8. A base station, comprising a processor, and a memory configured to store a computer program which, when executed by the processor, causes the processor to perform the scheduling method for a high-definition video of any one of claims 1 to 7.

9. A scheduling system, comprising a base station and a terminal device, wherein the base station is configured to perform the method for scheduling a high-definition video of any one of claim 1 to claim 7 to schedule the high-definition video, and send the scheduled high-definition video to the terminal device.

10. A computer-readable storage medium storing thereon at least one program which, when executed by at least one processor, causes the processor to perform the method for scheduling a high-definition video of any one of claim 1 to claim 7.
